# EUROPÄISCHE PATENTSCHRIFT

(11) **EP 2 741 978 B1**
(45) Veröffentlichungstag und Bekanntmachung des Hinweises auf die Patenterteilung: **08.06.2016**
(21) Anmeldenummer: 12745869.3
(22) Anmeldetag: 10.08.2012
(51) Int. Cl.: B65G 15/08

(54) **FÖRDERGURTANLAGE**
CONVEYOR BELT SYSTEM
SYSTÈME DE CONVOYEUR À COURROIE

(30) Priorität: 12.08.2011 DE 102011052697
(43) Veröffentlichungstag der Anmeldung: 18.06.2014
(73) Patentinhaber: ThyssenKrupp Industrial Solutions AG, 45143 Essen (DE)
(72) Erfinder: RAAZ, Viktor, 44869 Bochum (DE)
(74) Vertreter: Braun-Dullaeus Pannen Patent- und Rechtsanwälte
(86) Internationale Anmeldenummer: PCT/EP2012/065741
(87) Internationale Veröffentlichungsnummer: WO 2013/024050

(56) Entgegenhaltungen:
- EP-A1- 0 050 962
- JP-A- 60 048 808

## Beschreibung

Die Erfindung betrifft eine Fördergurtanlage mit einem in eine Längsrichtung verlaufenden Fördergurt und mit voneinander entlang des Fördergurtes beabstandeten Tragrollenanordnungen, die jeweils zumindest vier um den Außenumfang des Fördergurtes verteilte Tragrollen aufweisen, wobei der Fördergurt durch eine ringförmige Positionierung der Tragrollen der Tragrollenanordnungen zu einem Schlauch mit überlappenden Rändern geformt ist.

Fördergurtanlagen kommen für den Transport verschiedenster Güter, wie beispielsweise Abraum, Erze, Brennstoffe, Baustoffe oder dergleichen zum Einsatz. Hierbei liegen die Fördergurte oft in Form einer Mulde auf senkrecht zur Förderrichtung stehenden Tragrollen auf oder laufen zu einem Schlauch geformt durch Tragrollenanordnungen mit jeweils mehreren ringförmig angeordneten Tragrollen.

Während einfache Fördergurtanlagen mit einem muldenförmig geführten Fördergurt in der Regel Tragrollenanordnungen mit jeweils drei Tragrollen, das heißt einer mittleren Tragrolle und zwei seitlichen Tragrollen, aufweisen, bezieht sich die vorliegende Erfindung auf eine Ausgestaltung, bei der die Tragrollenanordnungen in Form von Tragrollenstationen, Tragrollengirlanden oder Tragrollenstühlen jeweils zumindest vier Tragrollen aufweisen. Mit diesen zumindest vier Tragrollen an jeder Tragrollenanordnung ist der Fördergurt zu einem Schlauch geformt.

Aus der DE 10 2009 043 904 A1 sowie der US 2010/0018841 A1 sind Fördergurtanlagen bekannt, bei denen die Tragrollenanordnung jeweils sechs auf einem Kreisring angeordnete Tragrollen aufweisen, so dass der Fördergurt in etwa eine Kreisringform aufweist. Je nach Festigkeit und Biegsamkeit des Fördergurtes wird an den Tragrollenanordnungen die Form eines Vielecks angenommen, weil sich der Fördergurt abschnittsweise eben an die Tragrollen anlegt. Ansonsten ergibt sich aber um den Umfang eine gleichmäßige Kontur.

Neben der beschriebenen, im Wesentlichen kreisförmigen Anordnung sind aus der Praxis auch Fördergurtanlagen bekannt, bei denen der sich an seinen seitlichen Enden überlappende Fördergurt eine gegenüber der Kreisform in seitlicher Richtung verbreiterte und in der Höhe flachere Ovalform aufweist. Bei den bekannten kreisförmigen und ovalförmigen Anordnungen ist das durch die Tragrollen einer Tragrollenanordnung begrenzte Lichtprofil bezüglich einer horizontalen sowie einer vertikalen Ebene symmetrisch. Während bei der kreisförmigen Anordnung der Tragrollen die radialen Abstände von dem Schwerpunkt des Lichtprofils, das heißt der Lichtprofilmitte bis zu der Rollenmanteloberfläche, bei allen Tragrollen gleich ist, weisen bei der ovalförmigen Anordnung die beiden horizontal angeordneten Tragrollen, also die unterste Tragrolle und die oberste Tragrolle, einen geringeren radialen Abstand zu dem Schwerpunkt auf, als die übrigen vier schräg angeordneten Tragrollen auf.

Aus der JP 2000118657 A1 ist eine Fördergurtanlage mit schwenkförmig angeordneten Tragräumen bekannt, die jeweils senkrecht zu ihrer Drehachse verstellbar sind, so dass das von den Tragrollen gebildete Lichtprofil veränderlich ist. Das Profil der Tragrollen wird dabei gewissermaßen von dem Fördergurt und dem darin transportierten Material vorgegeben. Insbesondere kann sich eine Ovalform mit einer vertikalen Ausrichtung ergeben, wobei durch die bewegliche Anordnung der Tragrollen möglichst gleichmäßige Kräfte auf den Fördergurt ausgeübt werden sollen. Es ist damit nicht vorgesehen, den Fördergurt bewusst zu zwängen oder zu verdrehen. Gemäß dem Ausführungsbeispiel liegt der Überlappungsbereich des umfangsseitig geschlossenen Fördergurtes flach an einer der Tragrollen an.

Auch aus der WO 92/02439 A1 ist ein Fördergurt mit verstellbaren Tragrollen bekannt, die in einer Ovalform mit horizontaler Ausrichtung angeordnet sind.

Bei dem Betrieb einer Fördergurtanlage sind die Verdrehstabilität des Fördergurtes, insbesondere des leeren Fördergurtes, sowie der mit einem entsprechenden Antrieb zu überwindende Bewegungswiderstand maßgebliche Eigenschaften. Bei einem Vergleich einer kreisförmigen Anordnung des Fördergurtes einerseits und einer ovalförmigen Anordnung andererseits ist festzustellen, dass bei der ovalförmigen Anordnung zwar eine besserer Verdrehstabilität beobachtet wird, wobei allerdings der Bewegungswiderstand erhöht ist.

Aus der JP 60 048808 A ist eine Fördergurtanlage nach dem Oberbegriff des Ansprunch 1 bekannt. In dieser Fördergurtanlage haben die beidenhorizontal angeordneten Tragrollen einen geringeren Abstand zu dem Schmerpankt, als die unterste und die oberste Tragrolle.

Vor diesem Hintergrund liegt der vorliegenden Erfindung die Aufgabe zugrunde, eine Fördergurtanlage anzugeben, die ausgewogene Eigenschaften hinsichtlich der Verdrehstabilität sowie des Bewegungswiderstandes aufweist.

Ausgehend von einer Fördergurtanlage mit den eingangs beschriebenen Merkmalen wird die Aufgabe erfindungsgemäß durch eine Förderguntonlage mit den Merkamalen des Anspruchs 1 gelölt. Gemäß dieser Ausgestaltung wird ausgehend von einer bekannten Gurtförderanlage die Gurtquerbiegeenergie zur Verbesserung der Laufeigenschaften und der Drehsicherheit berücksichtigt. Allerdings wird keine bezüglich einer vertikalen Achse im Wesentlichen spiegelsymmetrische Ausgestaltung gewählt. Vielmehr nimmt der Abstand zwischen dem Schwerpunkt in Umfangsrichtung gesehen, das heißt von dem innen liegenden Rand zu dem außen liegenden Rand bezogen auf den Fördergurt bzw. auf die Tragrollen zu.

Aus energetischen Gründen wird der Fördergurt in eine Position gedrängt, bei der die Gurtquerbiegeenergie minimal ist, das heißt der Gurt versucht einen möglichst großen Radius einzunehmen, weshalb dieser dazu neigt sich in Richtung des außen liegenden Randes in Umfangsrichtung zu drehen. Da der Überlappungsbereich an der in Umfangsrichtung gesehen letzten Tragrolle anliegt, wird der außen liegende Rand des Fördergurtes also in Richtung der daneben liegenden ersten Tragrolle gedrängt. Da die erste Tragrolle gegenüber einer letzten Tragrolle erheblich abgewinkelt ist, wirkt die erste Tragrolle für den außen liegenden Rand des Fördergurtes als eine Art Anschlag. Gemäß der erfindungsgemäßen Ausgestaltung wird dem gesamten Fördergurt in Umfangsrichtung derart ein Drehsinn aufgeprägt, dass der außen liegende Rand an dem Übergang zwischen der ersten und der letzten Tragrolle gehalten wird.

Damit liegt ein grundlegend anderer Ansatz als bei der Ausgestaltung vor, die aus der JP 2000118657 A bekannt ist. Während gemäß dem Stand der Technik der Gurt letztlich selbst die Position der Rollen vorgibt, wird gemäß der vorliegenden Erfindung dem Gurt durch die Anordnung der Tragrollen ein Drehsinn aufgeprägt, mit dem der im Überlappungsbereich außenliegende Rand des Fördergurtes in einem Winkel gegen die erste Tragrolle gedrückt wird, welche dann als Anschlag wirkt.

Eine derartige Aufbringung des Drehsinnes kann sich nicht ergeben, wenn die Ausrichtung der Tragrollen von dem Fördergurt selbst vorgegeben wird.

Insbesondere muss im Rahmen der vorliegenden Erfindung die erste Tragrolle auch erhöhte Kräfte aufnehmen, weil der außenliegende Rand des Fördergurtes durch den aufgeprägten Drehsinn zusätzlich gegen diese Tragrolle drückt. Auch mit einer ovalen Anordnung der Tragrollen gemäß der WO 92/02439 A1 ist die erfindungsgemäße Anordnung der Tragrollen nicht zu verwirklichen.

Ausgehend von diesem erfindungsgemäßen Prinzip ergeben sich unterschiedliche Ausgestaltungsmöglichkeiten für die Anordnung der Tragrollen. So kann der Abstand der in Umfangsrichtung aufeinander folgenden Tragrollen zu dem Schwerpunkt kontinuierlich entweder um einen gleichen Betrag oder um einen variablen Betrag zunehmen. Wenn eine gleichmäßige Zunahme vorliegt, sind die Tragrollen ausgehend von einem einheitlichen Tragrollendurchmesser entlang einer arithmetischen Spirale angeordnet.

In einer Ausführungsfrom, die kein Teil der beansprunchten Erfindung ist, besteht aber auch die Möglichkeit, dass zumindest in Umfangsrichtung gesehen eine erste und zweite Tragrolle bei einem gleichen Tragrollendurchmesser entlang eines Kreisbogens angeordnet sind und dass zumindest die in Umfangsrichtung gesehen letzte Tragrolle gegenüber dem Kreisbogen radial nach außen versetzt angeordnet ist. Wenn lediglich eine oder nur ein Teil der Tragrollen nach außen versetzt ist, ergibt sich gegenüber bekannten Fördergurtanlagen ein geringerer Aufwand für die Anpassung. Insbesondere ist auch ein nachträglicher Umbau in Betracht zu ziehen.

Im Rahmen der erfindungsgemäßen Ausgestaltung muss die Wickelrichtung des Fördergurtes im Querschnitt genau berücksichtigt werden.

Der Fördergurt ist üblicherweise aus einem flexiblen Grundmaterial, insbesondere Gummi, sowie in dem Grundmaterial eingebetteten Zugmitteln wie Drähten oder Seilen gebildet, die auch als Gurtzugträger bezeichnet werden. Im einfachsten Fall weist der Fördergurt über seine gesamte Breite gleiche Zugmittel mit einem konstanten Abstand auf. Bei einem solchen einfachen Fördergurt kann eine Zentrierung in einer Soll-Lage durch eine geeignete Positionierung der Tragrollen der Tragrollenanordnung erfolgen. Darüber hinaus besteht aber auch die Möglichkeit durch eine unterschiedliche Ausgestaltung der Zugmittel entlang des Querschnittes und/oder durch eine Veränderung der Dichte an Zugmitteln die Laufeigenschaften des Fördergurtes zu beeinflussen.

Die Erfindung wird im Folgenden anhand einer lediglich ein Ausführungsbeispiel darstellenden Zeichnung erläutert. Es zeigen:

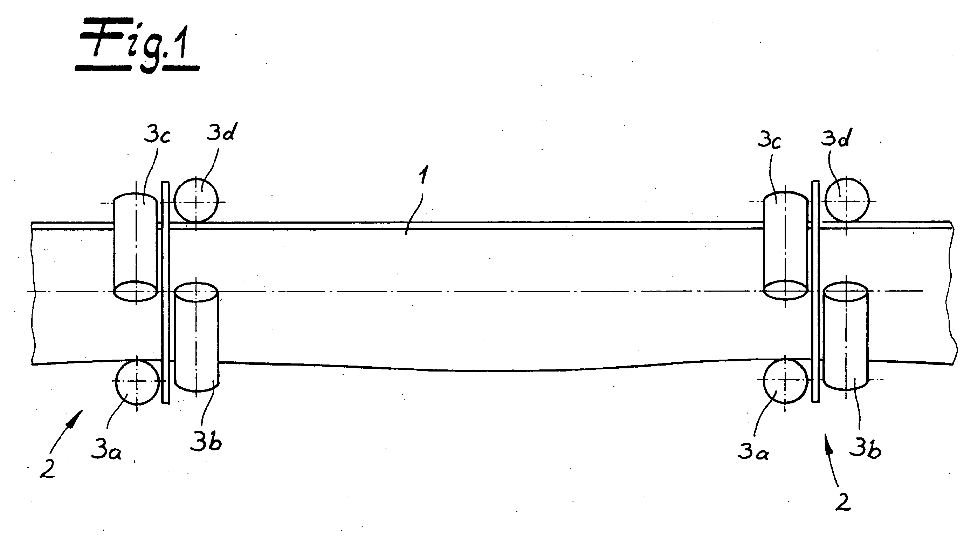

- **Fig. 1**: den prinzipiellen Aufbau einer Fördergurtanlage in einer Seitenansicht,
- **Fig. 2 und 3**: Querschnitte durch eine erfindungsgemäße Fördergurtanlage im Bereich einer Tragrolleanordnung.

Zum grundsätzlichen Aufbau einer Fördergurtanlage gehört im Rahmen der Erfindung ein in eine Längsrichtung verlaufender Fördergurt 1 sowie entlang des Fördergurtes 1 voneinander beabstandete Tragrollenanordnungen 2. In dem dargestellten Ausführungsbeispiel sind die Tragrollen 3a, 3b, 3c, 3d der Tragrollenanordnung 2 ringförmig angeordnet, um den Fördergurt 1 zu einem geschlossenen Schlauch zu formen.

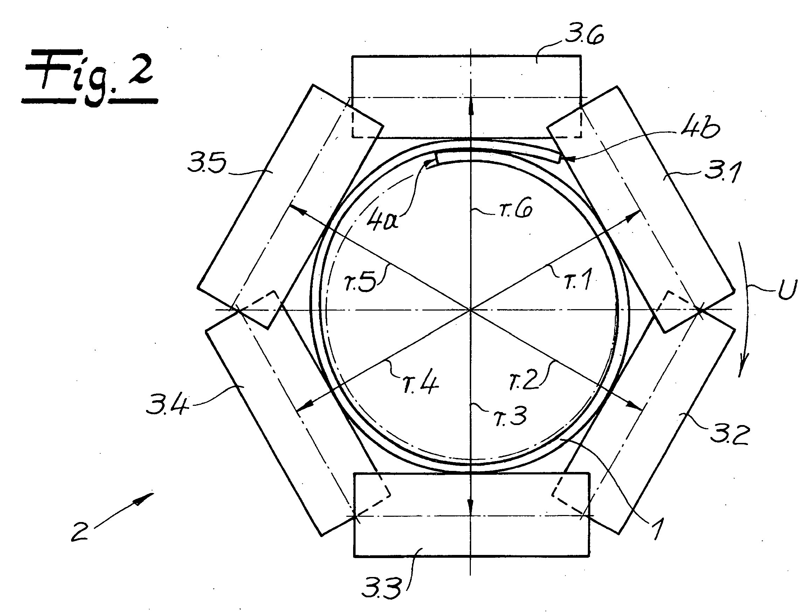

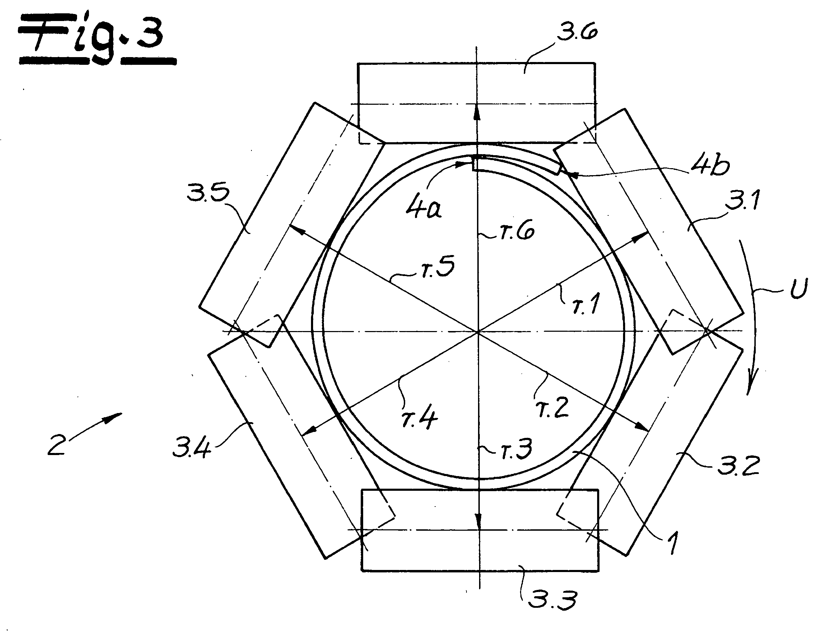

Die Fig. 2 und 3 zeigen alternative Ausgestaltungen der Fördergurtanlage mit einer bezüglich einer vertikalen Achse asymmetrischen Anordnung der Tragrollen 3.1, 3.2, 3.3, 3.4, 3.5, 3.6. Der Fördergurt 1 erstreckt sich im Querschnitt gesehen von dem an der Überlappung innen liegenden Rand 4a in einer Umfangsrichtung U zu dem außen liegenden Rand 4b, wobei sich die Ränder 4a, 4b an der in Umfangsrichtung U gesehen letzten Tragrolle 3.6 überlappen. Der Abstand r.6 zwischen der in Umfangsrichtung U gesehen letzten Tragrolle 3.6 und einem Schwerpunkt des von den Tragrollen 3.1, 3.2, 3.3, 3.4, 3.5, 3.6 begrenzten Lichtprofils ist größer als der entsprechende Abstand r.1 der in Umfangsrichtung U benachbarten ersten Tragrolle 3.1. In Umfangsrichtung U gesehen erweitert sich damit der den Fördergurt 1 einschließende Querschnitt, so dass der Fördergurt in Umfangsrichtung U gedrängt wird. Dabei wird der außen liegende Rand 4b gegen die erste Tragrolle 3.1 gedrückt, welche als Anschlag wirkt. Der Fördergurt 1 wird damit in Umfangsrichtung in eine bestimmte Position gedrängt und dort stabil gehalten.

Gemäß der Fig. 2 sind die Tragrollen 3.1, 3.2, 3.3, 3.4, 3.5, 3.6 entlang einer arithmetischen Spirale angeordnet, wobei der Abstand r.1, r.2, r.3, r.4, r.5, r.6 gleichmäßig zunimmt.

Fig. 3 zeigt eine alternative Ausgestaltung, die kein Teil der beanspruchten Erfindung ist, bei der die ersten drei Tragrollen 3.1, 3.2, 3.3 auf einem Kreisbogen liegen, während dann für die weiteren Tragrollen 3.4, 3.5, 3.6 ein zunehmender Abstand r.4, r.5, r.6 vorgesehen ist.

Ausschlaggebend ist im Rahmen der Erfindung die Form des Lichtprofils, also der Abstand von dem Schwerpunkt zu der Oberfläche der Tragrollen 3.1, 3.2, 3.3, 3.4, 3.5, 3.6. Aus Gründen der besseren Darstellbarkeit ist in den Figuren bei einem einheitlichen Rollendurchmesser der Abstand zu der Rollenachse dargestellt.

## Patentansprüche

1. Fördergurtanlage mit einem in Längsrichtung verlaufenden Fördergurt und mit voneinander entlang des Fördergurtes (1) beabstandeten Tragröllenanordnungen (2), die jeweils mindestens vier um den Außenumfang des Fördergurtes (1) verteilte Tragrollen (3.1, 3.2, 3.3, 3.4, 3.5, 3.6) aufweisen, wobei der Fördergurt (1) durch eine ringförmige Positionierung der Tragrollen (3.1, 3.2, 3.3, 3.4, 3.5, 3.6) der Tragrollenanordnungen (2) zu einem Schlauch mit überlappenden Rändern (4a, 4b) geformt ist, und wobei sich der Fördergurt (1) im Querschnitt gesehen von dem an der Überlappung innen liegenden Rand (4a) in einer Umfangsrichtung (U) zu dem außen liegenden Rand (4b) erstreckt, und dass sich die Ränder (4a, 4b) an einer in Umfangsrichtung (U) gesehen letzten Tragrolle (3.6) überlappen, wobei der Abstand (r.6) zwischen der in Umfangsrichtung (U) gesehen letzten Tragrolle (3.6) und einem Schwerpunkt des von den Tragrollen (3.1, 3.2, 3.3, 3.4, 3.5, 3.6) begrenzten Lichtprofils größer ist als der entsprechende Abstand (r.1), der in Umfangsrichtung (U) benachbarten ersten Tragrolle (3.1), **dadurch gekennzeichnet, dass** der Abstand (r.1, r.2, r.3, r.4, r.5, r.6) der in Umfangsrichtung (U) aufeinander folgenden Tragrollen (3.1, 3.2, 3.3, 3.4, 3.5, 3:6) zu dem Schwerpunkt kontinuierlich zunimmt.

2. Fördergurtanlage nach Anspruch 1, **dadurch gekennzeichnet, dass** die Tragrollen (3.1, 3.2, 3.3, 3.4, 3.5, 3.6) entlang einer arithmetischen Spirale angeordnet sind.

3. Fördergurtanlage nach Anspruch 1 oder 2, **dadurch gekennzeichnet, dass** die Tragrollenanordnungen (2) jeweils sechs Tragrollen (3a, 3b, 3c, 3d; 3.1, 3.2, 3.3, 3.4, 3.5, 3.6) aufweisen.

4. Fördergurtanlage nach einem der Ansprüche 1 bis 3, **dadurch gekennzeichnet, dass** der Fördergurt (1) aus einem flexiblen Grundmaterial und darin eingebetteten Zugmitteln gebildet ist.

## Claims

1. A conveyor belt system having a conveyor belt running in the longitudinal direction and having support-roller arrangements (2) spaced from one another along the conveyor belt (1), which have at least four support rollers (3.1, 3.2, 3.3, 3.4, 3.5, 3.6) distributed around the outer periphery of the conveyor belt (1) in each case, wherein the conveyor belt (1) is shaped by means of an annular positioning of the support rollers (3.1, 3.2, 3.3, 3.4, 3.5, 3.6) of the support-roller arrangements (2) to form a hose with overlapping edges (4a, 4b), and wherein, as seen in cross section, the conveyor belt (1) extends from the edge (4a) located on the inside at the overlap in a circumferential direction (U) to the edge (4b) located on the outside, and the edges (4a, 4b) overlap at a last support roller (3.6) as seen in the circumferential direction (U), wherein the spacing (r.6) between the last support roller (3.6) as seen in the circumferential direction (U) and a focus of the light profile delimited by the support rollers (3.1, 3.2, 3.3, 3.4, 3.5, 3.6) is larger than the corresponding spacing (r.1) of the adjacent first support roller (3.1) in the circumferential direction (U),
**characterised in that** the spacing (r.1, r.2, r.3, r.4, r.5, r.6) of the successive support rollers (3.1, 3.2, 3.3, 3.4, 3.5, 3 6) in the circumferential direction (U) increases continuously to the focus.

2. The conveyor belt system according to Claim 1, **characterised in that** the support rollers (3.1, 3.2, 3.3, 3.4, 3.5, 3.6) are arranged along an arithmetic spiral.

3. The conveyor belt system according to Claim 1 or 2, **characterised in that** the support-roller arrangements (2) have six support rollers (3a, 3b, 3c, 3d; 3.1, 3.2, 3.3, 3.4, 3.5, 3.6) in each case.

4. The conveyor belt system according to one of Claims 1 to 3, **characterised in that** the conveyor belt (1) is formed from a flexible base material and tensioning means embedded therein.

## Revendications

1. Système de courroie de convoyeur avec une courroie de convoyeur s'étendant en direction longitudinale et avec des ensembles de rouleaux porteurs (2) espacés les uns des autres le long de la courroie de convoyeur (1), lesquels présentent au moins quatre rouleaux porteurs (3.1, 3.2, 3.3, 3.4, 3.5, 3.6) répartis sur la périphérie extérieure de la courroie de convoyeur (1), dans lequel la courroie de convoyeur (1) est formée, grâce à un positionnement en forme d'anneau des rouleaux porteurs (3.1, 3.2, 3.3, 3.4, 3.5, 3.6) des ensembles de rouleaux porteurs (2), en un tuyau avec des bords (4a, 4b) se superposant, et dans lequel, lorsque vue en coupe transversale, la courroie de convoyeur (1) s'étend du bord (4a) situé à l'intérieur au niveau de la superposition dans une direction périphérique (U) au bord (4b) situé à l'extérieur, et en ce que les bords (4a, 4b) se superposent au niveau d'un dernier rouleau porteur (3.6) lorsque vu en direction périphérique (U),dans lequel la distance (r.6) entre le dernier rouleau porteur (3.6) vu en direction périphérique (U) et un centre de gravité du profil d'espace libre délimité par les rouleaux porteurs (3.1, 3.2, 3.3, 3.4, 3.5, 3.6) est plus grande que la distance (r.1) correspondante du premier rouleau porteur (3.1) voisin en direction périphérique (U),
**caractérisé en ce que** la distance (r.1, r.2, r.3, r.4, r.5, r.6) des rouleaux porteurs (3.1, 3.2, 3.3, 3.4, 3.5, 3.6) successifs en direction périphérique (U) augmente en continu vers le centre de gravité.

2. Système de courroie de convoyeur selon la revendication 1, **caractérisé en ce que** les rouleaux porteurs (3.1, 3.2, 3.3, 3.4, 3.5, 3.6) sont disposés le long d'une spirale arithmétique.

3. Système de courroie de convoyeur selon la revendication 1 ou 2, **caractérisé en ce que** les ensembles de rouleaux porteurs (2) présentent respectivement six rouleaux porteurs (3a, 3b, 3c, 3d ; 3.1, 3.2, 3.3, 3.4, 3.5, 3.6).

4. Système de courroie de convoyeur selon l'une des revendications 1 à 3, **caractérisé en ce que** la courroie de convoyeur (1) est formée par un matériau de base flexible et des moyens de traction noyés dans celui-ci.
